# FASCICULE DE BREVET EUROPEEN

(11) **EP 1 427 908 B1**
(45) Date de publication et mention de la délivrance du brevet: **11.11.2009**
(21) Numéro de dépôt: 02755577.0
(22) Date de dépôt: 13.09.2002
(51) Int. Cl.: E06B 9/88, F16D 3/02

(54) **DISPOSITIF D'ACCOUPLEMENT ELASTIQUE DESTINE A ALIGNER DEUX PIECES EN ROTATION**
ELASTISCHE KUPPLUNG ZUR AUSRICHTUNG DER DREHWINKELSTELLUNG ZWEIER TEILE
ELASTIC COUPLING DEVICE FOR ALIGNING TWO ROTATING PARTS

(30) Priorité: 21.09.2001 FR 0112224
(43) Date de publication de la demande: 16.06.2004
(73) Titulaire: Somfy SAS, 74300 Cluses (FR)
(72) Inventeur: LAGARDE, Eric, F-74700 Sallanches (FR); Menetrier, Didier Maurice, 74970 Marignier (FR)
(74) Mandataire: Bugnion Genève
(86) Numéro de dépôt international: PCT/IB2002/003780
(87) Numéro de publication internationale: WO 2003/027428

(56) Documents cités:
- DE-A- 2 830 360
- DE-A- 3 330 645
- US-A- 4 452 292

## Description

L'invention a pour objet un dispositif d'accouplement élastique destiné à lier deux pièces en rotation, comme définit dans le préambule de la revendication 1. Un tel dispositif est connu du document DE-A-33 30 645. L'invention a pour objet aussi un dispositif de détection de couple comme définit dans le préambule de la revendication 9. Un tel dispositif est connu du document EP-A-0 703 344. Tels dispositifs sont notamment destinés à relier la sortie d'un moteur tubulaire au tube d'enroulement d'un volet roulant ou similaire, par exemple comme prévu dans le document EP-A-0 135 731 pour l'enroulement d'un store. L'accouplement élastique permet au moteur de tourner encore quelques instants lorsque le store arrive en butée haute avant que le dispos-itif d'arrêt réagisse. Ceci permet d'absorber les variations de longueur de la toile du store et de garantir une position d'arrêt contre les butées.

Dans le volet roulant décrit dans le document EP-A-0 684 362 un accouplement élastique permet de maintenir une pression sur un verrou, pression nécessaire à son bon fonctionnement.

Dans le dispositif d'arrêt du volet roulant décrit dans le document DE 44 40 449 est prévu une roue à jeu permettant de détecter l'instant où le volet rencontre un obstacle par observation de la rotation de l'arbre d'enroulement relativement à l'arbre d'entraînement de l'arbre d'enroulement. En lieu et place de la roue à jeu on pourrait utiliser un accouplement élastique.

L'invention a pour but de réaliser un dispositif d'accouplement élastique particulièrement compact et capable de déployer un effort élastique important. Son volume réduit doit permettre, notamment, de le monter dans le tube d'enroulement d'un volet roulant.

Le dispositif d'accouplement élastique selon l'invention est définit dans la revendication 1.

Le moyen élastique est de préférence un ressort qui peut être parfaitement taré.

Un tel dispositif se prête particulièrement bien à être monté dans les moteurs tubulaires entraînant les tubes d'enroulement de volets roulants ou similaires.

Selon un mode d'exécution simple, le moyen élastique, en particulier un ressort, est monté partiellement dans un logement de la première pièce présentant deux extrémités contre lesquelles s'appuient les extrémités du moyen élastique et le moyen de compression est constitué d'un étrier mobile entre les branches duquel le moyen élastique est partiellement logé de telle sorte qu'une rotation de la seconde pièce a pour effet de comprimer le moyen élastique entre l'une des branches de l'étrier et l'une des extrémités du logement ménagé dans la première pièce.

Selon un mode d'exécution plus évolué, le dispositif comprend deux pignons montés symétriquement relativement à l'axe de la seconde pièce et le moyen de compression est constitué de deux étriers opposés disposés symétriquement relativement à l'axe de la seconde pièce, le moyen élastique étant monté entre les branches des étriers de manière à être logé en partie dans l'un des étriers et en partie dans l'autre étrier, ces étriers étant respectivement entraînés approximativement radialement par chacun des pignons.

Ce mode de réalisation présente l'avantage d'équilibrer les efforts radiaux. Il permet par conséquent une construction plus légère, moins encombrante et finalement plus économique.

Dans un développement de l'un des modes d'exécution précédents, le dispositif comprend un autre moyen élastique semblable au premier et monté à l'intérieur de la première pièce et au moins un pignon engrenant, d'une part, avec la denture de la seconde pièce et, d'autre part, avec la denture d'un moyen de compression de cet autre moyen élastique et la denture de la partie tubulaire de la seconde pièce présente une interruption en face de cet au moins un pignon, de telle sorte que l'autre moyen élastique n'est comprimé qu'au bout d'une certaine rotation relative des pièces.

Selon un autre mode d'exécution, le dispositif comprend un second moyen élastique disposé transversalement à l'axe de la seconde pièce et une seconde paire de pignons entraînant une seconde paire d'étriers semblable à la première paire d'étriers pour la compression du second moyen élastique. La denture de la partie tubulaire présente des interruptions en face des pignons de la seconde paire de pignons et les pignons de la seconde paire sont couplés par un pignon central de manière à maintenir la seconde paire d'étriers au centre de la partie tubulaire lorsque le dispositif est en position de repos, position dans laquelle les pignons de la seconde paire sont totalement libres et autoriseraient par conséquent la descente des étriers et du ressort en l'absence du pignon de couplage.

Au lieu de deux paires de pignons et de deux paires d'étriers, il serait bien entendu possible d'utiliser deux fois un seul pignon et un seul étrier comme dans le premier mode d'exécution.

Selon un autre mode d'exécution, le dispositif comprend un pignon étagé entre la première pièce et la seconde pièce, l'étage de diamètre le plus grand engrenant avec la denture intérieure de la seconde pièce et l'autre étage engrenant avec le moyen de compression.

Pour des raisons de simplification de réalisation, les pignons des deux paires sont avantageusement respectivement coaxiaux et les ressorts constituant les moyens élastiques sont parallèles.

Le dispositif d'accouplement selon l'invention trouve en outre une application intéressante dans un dispositif de détection d'un couple de valeur prédéterminée, en particulier pour commander l'arrêt d'un volet roulant ou similaire lorsqu'il arrive en fin de course ou lorsqu'il rencontre un obstacle. Dans ce cas, la première pièce est fixe et la seconde pièce est, par exemple, solidaire du moteur tubulaire du volet roulant. Le dispositif comprend des moyens de détection de la rotation de la seconde pièce relativement à la pièce fixe. Les dimensions de la partie fixe située à l'extérieur du moteur tubulaire peuvent être réduites au strict minimum ce qui réduit l'encombrement de l'installation relativement à des solutions utilisant deux ressorts extérieurs tels que décrits dans le document EP 0 703 344.

La force du ressort est parfaitement maîtrisable contrairement à la barre de torsion utilisée dans le dispositif décrit dans le document FR-A-2 431 022 (DE 28 30 360), barre de torsion dont la force difficilement maîtrisable peut soumettre le volet roulant à des forces importantes susceptibles de le dégrader.

Des modes d'exécution seront décrits plus en détail en relation au dessin annexé.
La figure 1 est une vue en coupe diamétrale selon II-II de la figure 2 représentant un premier mode d'exécution d'accouplement élastique entre un moteur tubulaire et le tube d'enroulement d'un volet roulant ou similaire.
La figure 2 est une vue en coupe selon I-I de la figure 1.
La figure 3 est une vue en coupe selon III-III de la figure 4 du premier mode d'exécution utilisé dans un dispositif détecteur de couple.
La figure 4 est une vue en coupe selon IV-IV de la figure 3.

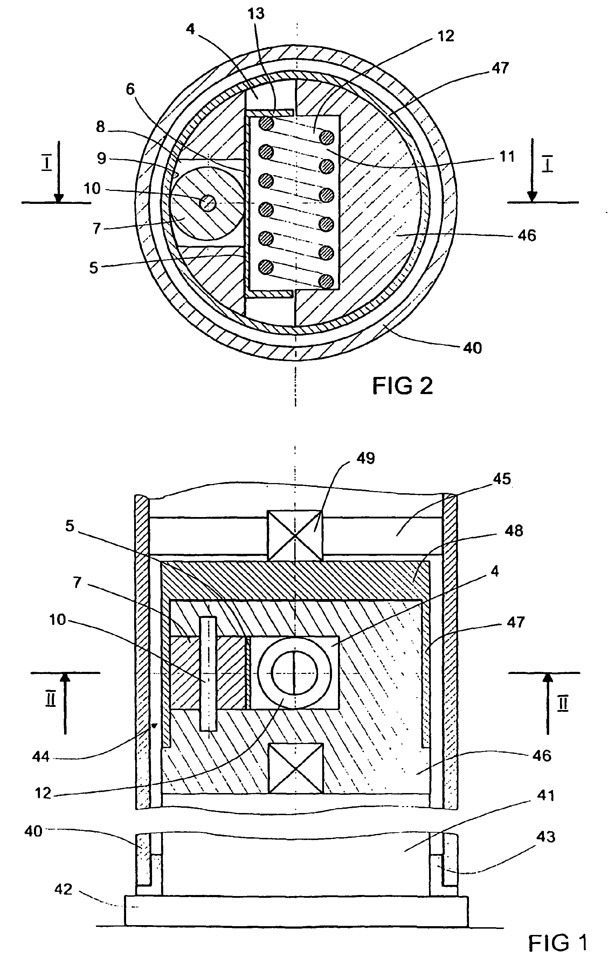

Toutes les figures qui suivent concernent des détecteurs de couple, mais les vues en coupe axiales peuvent aisément être modifiées comme représenté à la figure 1 pour représenter un accouplement élastique entre un moteur et un tube d'enroulement.

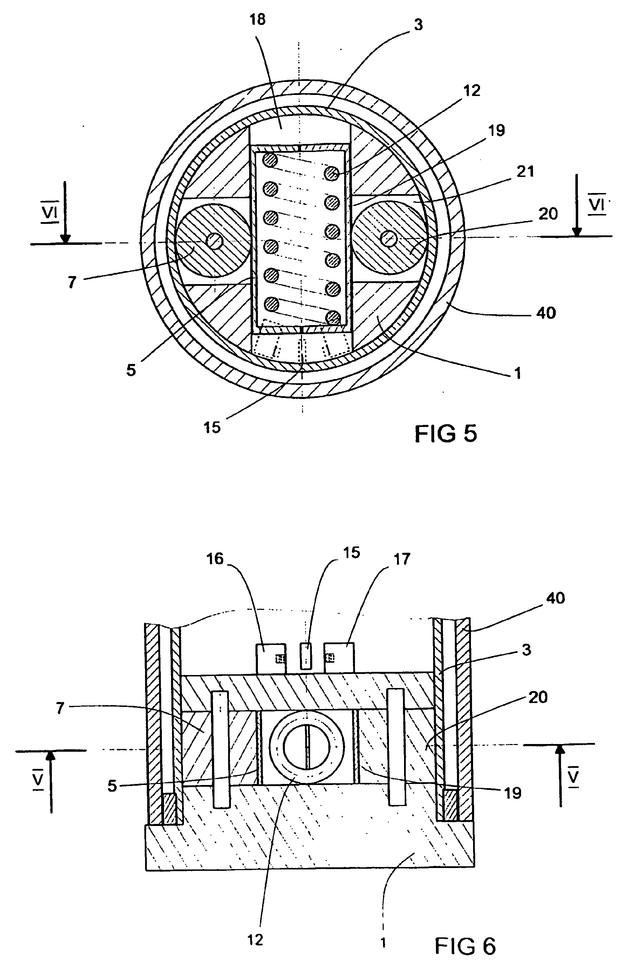

La figure 5 est une vue en coupe selon V-V de la figure 6 d'un deuxième mode d'exécution.
La figure 6 est une vue en coupe selon VI-VI de la figure 5.

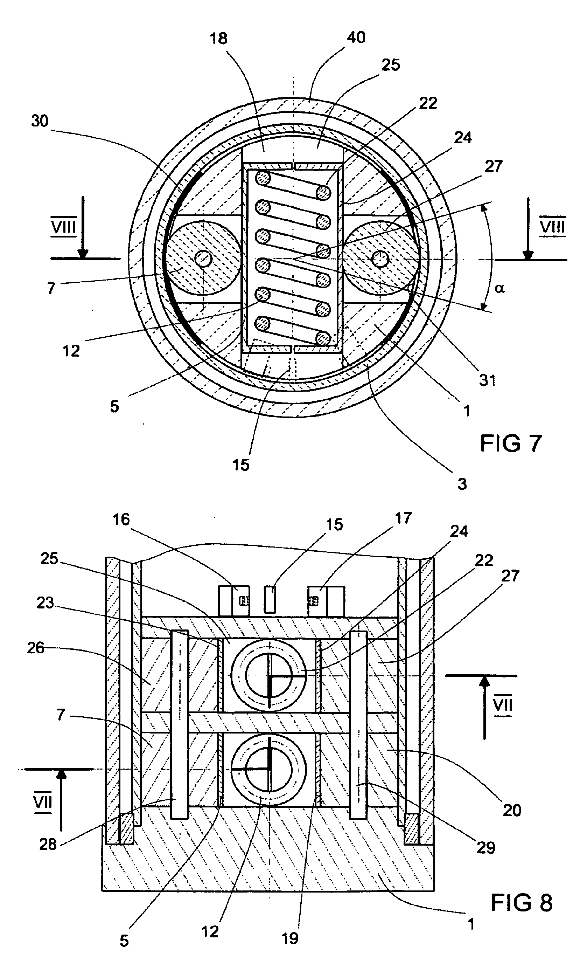

La figure 7 est une vue en coupe selon VII-VII de la figure 8 d'un troisième mode d'exécution.
La figure 8 est une vue en coupe selon VIII-VIII de la figure 7.

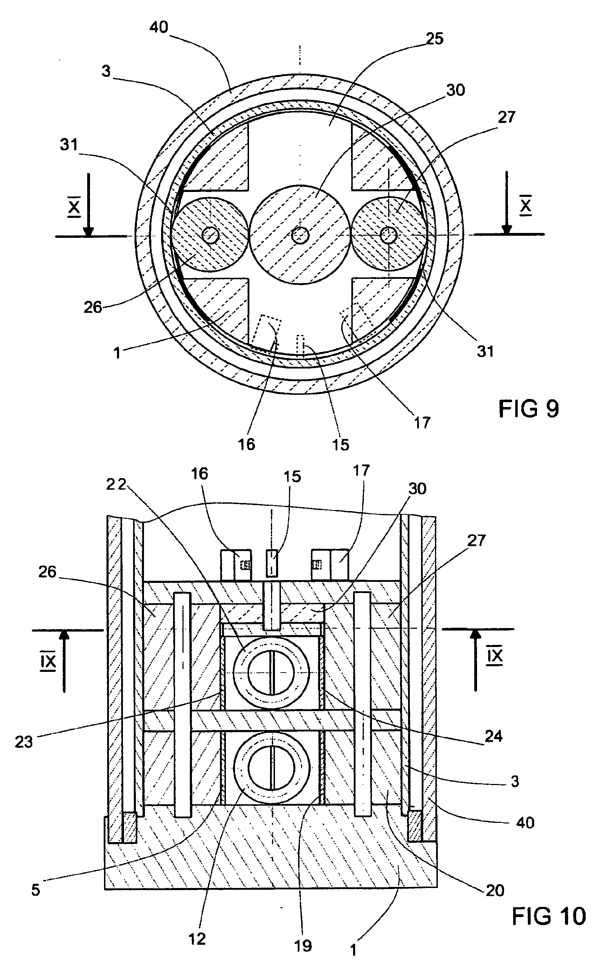

La figure 9 est une vue en coupe selon IX-IX de la figure 10 représentant un perfectionnement du troisième mode d'exécution.
La figure 10 est une vue en coupe selon X-X de la figure 9.

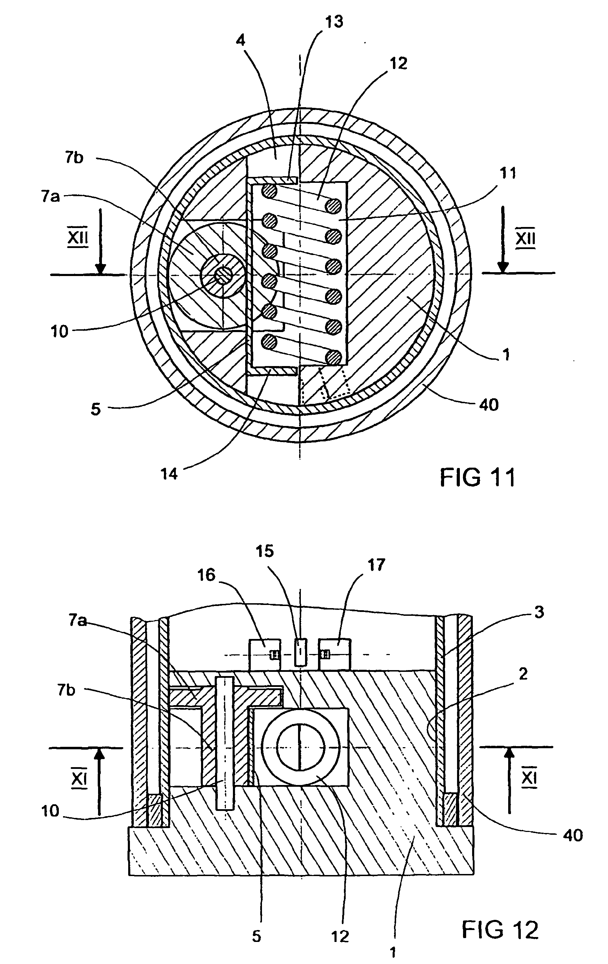

La figure 11 est une vue en coupe selon XI-XI d'un quatrième mode d'exécution.
La figure 12 est une vue en coupe selon XII-XII de la figure 11.

A la figure 1 est partiellement représenté un tube d'enroulement 40 sur lequel vient s'enrouler un store ou un volet roulant non représenté. De manière connue, le tube d'enroulement 40 est entraîné par un moteur tubulaire 41 monté dans le tube d'enroulement 40, coaxialement à celui-ci et dont le carter est fixé à une plaque 42 elle-même fixée contre une structure fixe, par exemple une embrasure de fenêtre. L'extrémité correspondante du tube d'enroulement 40 est montée rotativement sur le moteur 41 par l'intermédiaire d'une bague 43. Le moteur 41, plus précisément la sortie du réducteur associé à ce moteur, entraîne, par l'intermédiaire d'un accouplement élastique 44, une roue 45 fixée au tube d'enroulement 40.

L'accouplement élastique 44 comprend un corps cylindrique massif 46 dans lequel est ménagé un premier logement 4 s'étendant sensiblement radialement à travers le corps 46. Dans ce logement 4 est monté un étrier 5 pouvant coulisser radialement dans le logement 4. La face extérieure de l'étrier 5 présente une denture 6 orientée parallèlement à l'axe du tube d'enroulement. Cette denture 6 est en prise avec un pignon 7 monté dans un deuxième logement 8 ménagé dans le corps 46 et dont l'axe 10 est parallèle à l'axe du tube d'enroulement. Le pignon 7 engrène d'autre part avec une denture 9 formée sur la paroi interne d'un tube 47 coaxial au tube d'enroulement et solidaire d'un disque 48 muni d'un carré 49 par lequel il entraîne la roue 45. Le corps 46 présente un troisième logement 11 s'étendant sensiblement radialement sur une partie seulement du diamètre du corps 46. Dans ce logement 11 est partiellement logé un ressort 12. La moitié axiale du ressort 12 est située dans le logement 11, son autre moitié étant logée entre les branches 13 et 14 de l'étrier 5.

L'accouplement est représenté au repos, c'est-à-dire en l'absence d'un couple suffisant pour comprimer le ressort 12. Lorsque le tube d'enroulement 40 est retenu, par exemple à la fin de l'enroulement du volet roulant, la rotation relative entre le tube 47 et le moteur 41 a pour effet d'entraîner le pignon 7 et par celui-ci l'étrier 5. Le ressort 12 est alors comprimé entre une des branches de l'étrier et l'extrémité opposée du logement 11.

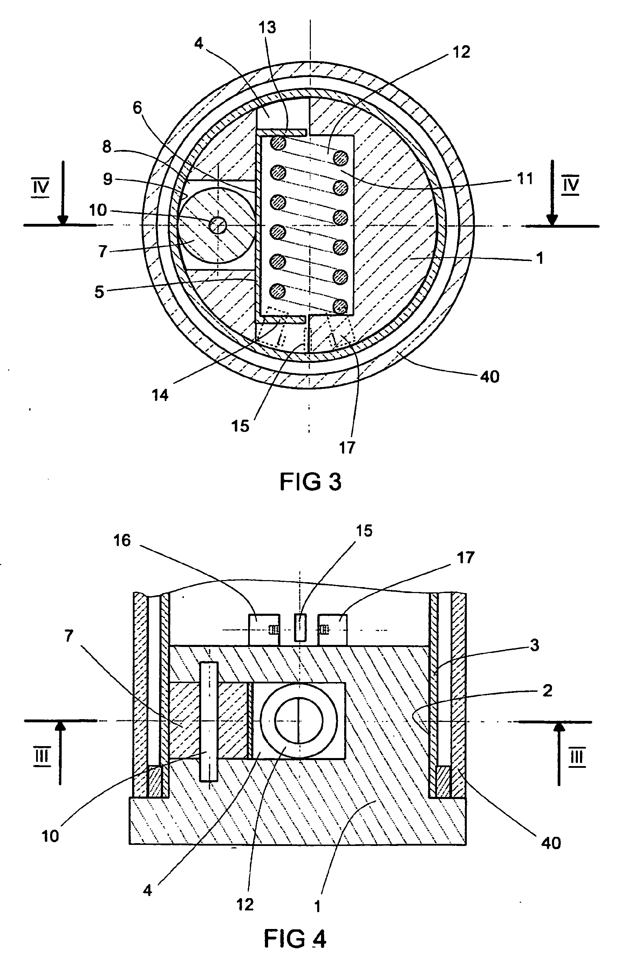

Les figures suivantes représentent des dispositifs de détection de couple, mais comme ceci ressortira immédiatement de la description des figures 3 et 4, la structure du détecteur de couple est essentiellement identique à celle de l'accouplement élastique, de telle sorte que les modes d'exécution représentés aux figures 3 à 12 peuvent être aisément adaptés pour constituer des accouplements élastiques. De manière à bien souligner cette identité, les composants de l'accouplement élastique représentés aux figures 1 et 2 qui se retrouvent dans les figures suivantes ont été désignés par les mêmes références.

Aux figures 3 et 4, un support fixe 1 (correspondant au support 42 de la figure 1) présente une portée cylindrique 2 sur laquelle est monté rotativement un tube 3, par exemple le prolongement du carter d'un moteur tubulaire analogue au moteur 41. Autour du tube 3 on retrouve le tube d'enroulement 40 d'un volet roulant monté rotativement sur le support fixe 1. Dans le support fixe 1 est ménagé le premier logement 4 s'étendant sensiblement radialement à travers le support comme dans l'accouplement décrit plus haut. Dans ce logement est monté l'étrier 5 pouvant coulisser radialement dans le logement 4. Comme précédemment, la face extérieure de l'étrier 5 présente une denture 6 orientée parallèlement à l'axe du tube 3. Cette denture est en prise avec un pignon 7 monté dans un deuxième logement 8 ménagé dans le support fixe 1 et dont l'axe 10 est parallèle à l'axe du tube 3. Le pignon 7 engraine d'autre part avec une denture 9 formée sur la paroi interne du tube 3. Le support fixe 1 présente un troisième logement 11 s'étendant sensiblement radialement relativement à l'axe du tube sur une partie seulement du diamètre de la portée 2 du support fixe et ouvert du côté du logement 4. Dans ce logement 11, est partiellement logé un ressort 12 légèrement précontraint de manière à s'appuyer sur les extrémités du logement 11. La moitié axiale du ressort 12 est située dans le logement 11, son autre moitié étant logée entre les branches 13 et 14 de l'étrier 5.

Le tube 3 est muni d'un doigt radial 15 dirigé vers l'intérieur et engagé entre deux interrupteurs 16 et 17 fixés sur une face radiale du support fixe 1 de manière à être alternativement actionnés par le doigt 15 lorsque le tube 3 tourne dans un sens ou dans l'autre.

Ces interrupteurs commandent par exemple l'arrêt d'un moteur.

Le dispositif est représenté au repos, c'est-à-dire en l'absence d'un couple suffisant pour comprimer le ressort 12. Si un couple suffisant est exercé sur le tube 3, celui-ci est entraîné en rotation, ce qui a pour effet d'entraîner le pignon et par celui-ci l'étrier 5. Le ressort 12 est alors comprimé entre l'une des branches de l'étrier et l'extrémité opposée du logement 11. Au bout d'un certain angle de rotation du tube 3, le doigt 15 vient actionner l'un des interrupteurs.

Les moyens de détection de la rotation sont ici symétriques. Le doigt 15 et/ou les interrupteurs 16 et 17 pourraient toutefois être disposés asymétriquement de manière à ce que la course du doigt 15 avant d'actionner un interrupteur soit différente pour chacun des deux interrupteurs. Ceci permettrait de détecter des couples différents dans un sens et dans l'autre sens de rotation.

Dans une application aux volets roulants ou similaires, les couples détectés sont des couples développés par l'arrivée en butée haute et basse du volet roulant.

Le deuxième mode d'exécution, représenté aux figures 5 et 6, diffère du deuxième mode d'exécution en ce que les logements 4 et 11 sont remplacés par un logement unique 18 s'étendant diamétralement à travers le support fixe 1 et en ce qu'il est prévu un second étrier 19 identique à l'étrier 5 et disposé symétriquement à l'étrier 5 relativement à l'axe du tube 3, le ressort 12 étant logé pour moitié dans un des étriers et pour moitié dans l'autre étrier. La denture du second étrier 19 est en prise avec un second pignon 20 d'axe parallèle au premier pignon 7, monté dans un logement 21 du support et en prise avec une denture intérieure du tube 3. Lorsque le tube tourne, les étriers se déplacent dans des sens opposés de manière équilibrée. Ce mode de réalisation présente l'avantage d'équilibrer les efforts radiaux, et par conséquent de moins contraindre la structure, ce qui permet d'avoir une construction plus légère, moins encombrante et plus économique.

Le mode d'exécution représenté aux figures 7 et 8 diffère du mode d'exécution précédent en ce qu'il comporte un second ressort 22 disposé radialement dans le tube 3, parallèlement au ressort 12 et logé dans une seconde paire d'étriers 23, 24 identique et parallèle à la première paire d'étriers et montée coulissante dans un second logement 25 du support fixe 1. Comme les étriers 5 et 19, les étriers 23 et 24 sont en prise avec des pignons 26 et 27 montés respectivement coaxialement aux pignons 7 et 20 sur des axes communs 28 et 29. Alors que la denture 30 du tube 3 est continue sur un certain arc, en face des pignons 7 et 20, cette denture présente une interruption 31 s'étendant sur un arc α en face de chacun des pignons 26 et 27, en position de repos des dispositifs. Dans cette position de repos, l'interrupteur 16 est en outre plus proche du doigt d'actionnement 15 que l'interrupteur 17.

Ce mode d'exécution permet de détecter des couples sensiblement différents pour chaque sens de rotation. Pour une première rotation du tube 3 d'un angle approximativement égal à α/2, seuls les pignons 7 et 20 sont entraînés et seul le ressort 12 est comprimé. Si cette rotation correspond à la distance entre le doigt 15 et l'interrupteur 16, le couple détecté correspondra à la compression du seul ressort 12. Si par contre le tube 3 est entraîné dans l'autre sens, la distance entre le doigt 15 et l'interrupteur 17 permettra à la denture du tube 3 de venir également en prise avec les pignons 26 et 27 ce qui entraînera également la compression du second ressort 22 dont la force s'ajoutera à celle du ressort 12. Le couple détecté sera donc sensiblement plus grand. Dans le cas d'une application à l'entraînement de volet roulant, le couple le plus faible correspondra à la butée basse et le couple le plus élevé à l'arrivée en butée haute.

Appliquée à un volet roulant motorisé, cette construction présente en outre l'avantage d'être symétrique, c'est-à-dire de permettre son positionnement à gauche ou à droite d'une embrasure.

Dans ce mode d'exécution on constatera, qu'au repos, en position verticale du ressort 22, le poids du ressort et des étriers 23 et 24 aura tendance à entraîner cet ensemble qui n'est pas retenu par les pignons 26 et 27, ceux-ci n'étant pas en prise avec la denture du tube 3. Pour éviter cet inconvénient, il suffit de monter un pignon central 30 engrenant avec les deux pignons 26 et 27, comme représenté aux figures 9 et 10.

Dans le mode d'exécution représenté aux figures 11 et 12, le pignon 7 a été remplacé par un pignon étagé 7a, 7b, l'étage de plus grand diamètre 7a engrenant avec la denture du tube 3 et l'étage 7b engrenant avec l'étrier 5. L'effet démultiplicateur ainsi obtenu permet d'obtenir un déplacement angulaire en phase élastique plus important ce qui permet, dans le cadre d'une utilisation en accouplement élastique, d'absorber une plus grande variation de longueur du store, notamment pour les stores à grand déploiement de toile et, dans le cadre d'une utilisation en détecteur de couple d'arrêt d'un moteur, une détection plus précise et plus aisée du couple prédéterminé.

Dans les modes d'exécution à deux ressorts, le second ressort pourrait être différent du premier et disposé différemment.

Les moyens de détection pourraient être disposés à l'extérieur de la partie tubulaire.

## Revendications

1. Dispositif d'accouplement élastique destiné à lier deux pièces en rotation, comprenant une première pièce cylindrique (46; 1), une seconde pièce cylindrique (47; 3) au moins en partie tubulaire et entourant la première pièce par sa partie tubulaire et munie d'une denture intérieure (9) et au moins un moyen élastique (12; 22) monté à l'intérieur de la première pièce (1), **caractérisé en ce que** ledit moyen élastique (12,22) est monté dans un logement (11) et travaille en compression sensiblement radialement, le dispositif d'accouplement élastique comprenant aussi au moins un pignon (7; 20, 26, 27; 7a, 7b) monté dans la première pièce et engrenant avec la denture de la seconde pièce et un moyen de compression (5; 19; 23; 24) du moyen élastique entraîné par le pignon.

2. Dispositif selon la revendication 1, **caractérisé en ce que** le moyen élastique (12) est monté partiellement dans un logement (11) de la première pièce présentant deux extrémités contre lesquelles s'appuient les extrémités du moyen élastique et **en ce que** le moyen de compression est constitué d'un étrier mobile (5) entre les branches duquel le moyen élastique est partiellement logé de telle sorte qu'une rotation de la seconde pièce (3) a pour effet de comprimer le moyen élastique entre l'une des branches de l'étrier et l'une des extrémités du logement ménagé dans la première pièce (1).

3. Dispositif selon la revendication 1, **caractérisé en ce qu'**il comprend deux pignons (7, 20) montés symétriquement relativement à l'axe de la seconde pièce (3) et **en ce que** le moyen de compression est constitué de deux étriers opposés (5, 19) disposés symétriquement relativement à l'axe de la seconde pièce, le moyen élastique étant monté entre les branches des étriers de manière à être logé en partie dans l'un des étriers et en partie dans l'autre étrier, ces étriers étant respectivement entraînés approximativement radialement par chacun des pignons.

4. Dispositif selon l'une des revendications 1 à 3, **caractérisé en ce qu'**il comprend un autre moyen élastique (22) semblable au premier et monté à l'intérieur de la première pièce (1) et au moins un pignon (26, 27) engrenant, d'une part, avec la denture de la seconde pièce (3) et, d'autre part, avec la denture d'un moyen de compression (23, 24) de cet autre moyen élastique (22), et **en ce que** la denture de la partie tubulaire de la seconde pièce présente une interruption (31) en face de cet au moins un pignon.

5. Dispositif selon la revendication 3, **caractérisé en ce qu'**il comprend un second moyen élastique (22) disposé transversalement à l'axe de la seconde pièce (3) et une seconde paire de pignons (26, 27) entraînant une seconde paire d'étriers (23, 24) semblable à la première paire d'étriers pour la compression du second moyen élastique, **en ce que** la denture de la partie tubulaire présente des interruptions (31) en face des pignons de la seconde paire de pignons et **en ce que** les pignons (26, 27) de la seconde paire sont couplés par un pignon central (30).

6. Dispositif selon la revendication 1, **caractérisé en ce qu'**il comprend un pignon étagé (7a, 7b) entre la première pièce (1) et la seconde pièce (3) l'étage de diamètre le plus grand (7a) engrenant avec la denture intérieure de la seconde pièce (3) et l'autre étage (7b) engrenant avec le moyen de compression (5).

7. Dispositif de détection d'un couple de valeur prédéterminée utilisant le dispositif d'accouplement élastique selon l'une des revendications 1 à 6, **caractérisé en ce que** la première pièce (1) est fixe et qu'il comprend des moyens de détection (15, 16, 17) de la rotation de la seconde pièce (3) relativement à la pièce fixe (1) .

8. Dispositif de détection selon la revendication 7, **caractérisé en ce que** les moyens de détection de la rotation sont constitués d'un doigt (15) et d'une paire d'interrupteurs (16, 17).

9. Dispositif de détection d'un couple **caractérisé en ce qu'**il comprend ;
- un support fixe(1),
- un moteur (41) comprenant un carter (3) se prolongeant sur le support (1) et muni d'une denture intérieure (9),
- au moins un moyen élastique (12) monté à l'intérieur du support fixe (1) dans un logement (11) et travaillant en compression sensiblement radialement,
- au moins un pignon (7) monté dans le support et engrenant avec la denture du carter (3),
- un moyen de compression (5) du moyen élastique entraîné par le pignon et
- des moyens de détection (15, 16, 17) de la rotation du carter (3) relativement au support.

10. Volet roulant **caractérisé en ce qu'**il comprend un dispositif selon l'une des revendications précédentes.

11. Store **caractérisé en ce qu'**il comprend un dispositif selon l'une des revendications 1 à 9.

## Claims

1. An elastic coupling device for connecting two pieces in rotation, comprising a first cylindrical piece (46; 1), a second cylindrical piece (47; 3) that is at least partly tubular andsurroundig the first piece via its tubular part and is provided with an inner toothset (9) and at least one elastic means (12; 22) mounted inside the first piece (1), **characterized in that** said elastic means (12; 22) is mounted in a housing (11) and works in compression substantially radially, the elastic coupling device comprising at least one pinion (7; 20, 26, 27; 7a, 7b) mounted in the first piece and meshing with the toothset of the second piece, and a means (5; 19; 23; 24) for compressing the elastic means entrained by the pinion.

2. The device as claimed in claim 1, **characterized in that** the elastic means (12) is mounted partially in a housing (11) of the first piece having two ends against which the ends of the elastic means bear, and **in that** the compression means consists of a movable U-shaped piece (5), between the branches of which the elastic means is partially housed in such a manner that a rotation of the second piece (3) has the effect of compressing the elastic means between one of the branches of the U-shaped piece and one of the ends of the housing provided in the first piece (1).

3. The device as claimed in claim 1, **characterized in that** it comprises two pinions (7, 20) mounted symmetrically relative to the axis of the second piece (3), and **in that** the compression means consists of two facing U-shaped pieces (5, 19) arranged symmetrically relative to the axis of the second piece, the elastic means being mounted between the branches of the U-shaped pieces so as to be housed partly in one of the U-shaped pieces and partly in the other U-shaped piece, these U-shaped pieces being, respectively, entrained approximately radially by each of the pinions.

4. The device as claimed in one of claims 1 to 3, **characterized in that** it comprises another elastic means (22), similar to the first elastic means and mounted inside the first piece (1), and at least one pinion (26, 27) meshing, on the one hand, with the toothset of the second piece (3) and, on the other hand, with the toothset of a means (23, 24) for compressing this other elastic means (22), and **in that** the toothset of the tubular part of the second piece has an interruption (31) facing this at least one pinion.

5. The device as claimed in claim 3, **characterized in that** it comprises a second elastic means (22) arranged transversely to the axis of the second piece (3), and a second pair of pinions (26, 27) entraining a second pair of U-shaped pieces (23, 24), similar to the first pair of U-shaped pieces, for compressing the second elastic means, **in that** the toothset of the tubular part has interruptions (31) facing the pinions of the second pair of pinions, and **in that** the pinions (26, 27) of the second pair are coupled by a central pinion (30).

6. The device as claimed in claim 1, **characterized in that** it comprises a staged pinion (7a, 7b) between the first piece (1) and the second piece (3), the stage (7a) of larger diameter meshing with the inner toothset of the second piece (3) and the other stage (7b) meshing with the compression means (5).

7. A device for detecting a torque of predetermined value, using the elastic coupling device as claimed in one of claims 1 to 6, **characterized in that** the first piece (1) is fixed and comprises means (15, 16, 17) for detecting the rotation of the second piece (3) relative to the fixed piece (1).

8. The detection device as claimed in claim 7, **characterized in that** the means for detecting the rotation consist of a finger (15) and a pair of switches (16, 17).

9. A device for detecting a torque, **characterized in that** it comprises:
- a fixed support (1),
- a motor (41) having an extending tube (3) mounted on the support and provided with an inner tothset (9),
- at least one elastic means (12) mounted inside the fixed support (1) in a housing (11) and working in compression substantially radially,
- at least one pinion (7) mounted in the fixed support and meshing with the toothset of the extending tube (3),
- a means (5) for compressing the elastic means entrained by the pinion and
- means (15, 16, 17) for detecting the rotation of the extending tube (3) relative to the fixed support.

10. A roller shutter, **characterized in that** it comprises a device according to one of preceding claims.

11. An awning, **characterized in that** it comprises a device according to one of claims 1 to 9.

## Patentansprüche

1. Elastische Kupplungsvorrichtung zum Verbinden zweier drehbarer Teile, mit einem ersten zylindrischen Teil (46; 1), mit einem zweiten zylindrischen Teil (47; 3), das wenigstens aus einem röhrenförmigen Stück besteht, mit diesem röhrenförmigen Stück das erste Teil umgibt und mit einer Innenverzahnung (9) versehen ist, und mit wenigstens einem elastischen Mittel (12; 22), das im Inneren des ersten Teils (1) montiert ist, **dadurch gekennzeichnet, dass** das erwähnte elastische Mittel (12, 22) in einem Unterbringungsraum (11) montiert und im wesentlichen radial komprimiert ist, wobei die elastische Kupplungsvorrichtung ausserdem wenigstens ein Ritzel (7; 20, 26, 27; 7a, 7b), das im ersten Teil montiert ist und mit der Verzahnung des zweiten Teils in Eingriff steht, und ein komprimiertes Mittel (5; 19; 23; 24) des elastischen Mittels aufweist, das vom Ritzel angetrieben wird.

2. Kupplungsvorrichtung nach Anspruch 1, **dadurch gekennzeichnet, dass** das elastische Mittel (12) teilweise in einem Unterbringungsraum (11) des ersten Teils montiert ist, welcher zwei Enden hat, gegen die sich die Enden des elastischen Mittels abstützen, und dass das komprimierte Mittel aus einem beweglichen Bügel (5) besteht, zwischen dessen Schenkeln das elastische Mittel teilweise angeordnet ist, derart, dass eine Drehung des zweiten Teils (3) das Zusammendrücken des elastischen Mittels zwischen einem der Schenkel des Bügels und einem der Enden des im ersten Teil (1) angebrachten Unterbringungsraums bewirkt.

3. Kupplungsvorrichtung nach Anspruch 1, **dadurch gekennzeichnet, dass** sie zwei symmetrisch zur Achse des zweiten Teils (3) montierte Ritzel (7, 20) aufweist und dass das komprimierte Mittel aus zwei gegenüberliegenden Bügeln (5, 19) besteht, die symmetrisch zu Achse des zweiten Teils angeordnet sind, wobei das elastischen Mittel zwischen den Schenkeln der Bügel montiert ist, derart, dass es sich zum Teil in einem der Bügel und zum Teil im anderen Bügel befindet und wobei diese Bügel durch jeweils eines der Ritzel näherungsweise radial angetrieben werden.

4. Kupplungsvorrichtung nach einem der Ansprüche 1 bis 3, **dadurch gekennzeichnet, dass** sie ein anderes elastisches Mittel (22), das dem ersten ähnlich ist und im Inneren des ersten Teils (1) montiert ist, sowie wenigstens ein Ritzel (26, 27) aufweist, das einerseits mit der Verzahnung des zweiten Teils (3) und andererseits mit der Verzahnung eines komprimierten Mittels (23, 24) dieses anderen elastischen Mittels (22) in Eingriff ist, und dass die Verzahnung des röhrenförmigen Stücks des zweiten Teils eine Unterbrechung (31) vor diesem wenigstens einem Ritzel aufweist.

5. Kupplungsvorrichtung nach Anspruch 3, **dadurch gekennzeichnet, dass** sie ein zweites, quer zur Achse des zweiten Teils (3) angeordnetes elastisches Mittel (22) sowie ein zweites Paar Ritzel (26, 27) aufweist, welche ein zweites, dem ersten Bügelpaar ähnliches Bügelpaar (26, 27) antreiben, um das zweite elastische Mittel zu komprimieren, dass die Verzahnung des röhrenförmigen Stücks Unterbrechungen (31) vor den Ritzeln des zweiten Ritzelpaares aufweist und dass die Ritzel (26, 27) des zweiten Paares durch ein zentrales Ritzel (30) mit einander gekuppelt sind.

6. Kupplungsvorrichtung nach Anspruch 1, **dadurch gekennzeichnet, dass** sie ein abgestuftes Ritzel (7a, 7b) zwischen dem ersten Teil (1) und dem zweiten Teil (3) aufweist und dass die Stufe mit dem grösseren Durchmesser (7a) mit der Innenverzahnung des zweiten Tils (3) und die andere Stufe (7b) mit dem komprimierten Mittel (5) in Eingriff steht.

7. Vorrichtung zum Erfassen eines Drehmoments, das einen vorbestimmten Wert hat, unter Verwendung der elastischen Kupplungsvorrichtung nach einem der Ansprüche 1 bis 6, **dadurch gekennzeichnet, dass** das erste Teil (1) feststeht und dass sie Mittel (15, 16, 17) zum Erfassen der Drehung des zweiten Teils (3) relativ zum feststehenden Teil (1) aufweist.

8. Vorrichtung nach Anspruch 7, **dadurch gekennzeichnet, dass** die Mittel zum Erfassen der Drehung aus einem Finger (15) und einem Schalterpaar (16, 17) bestehen.

9. Vorrichtung zum Erfassen eines Drehmoments, **gekennzeichnet durch**:
- einen feststehenden Träger (1),
- einen Motor (41) mit einem Gehäuse (3), das in Verlängerung des Trägers (1) auf diesem angeordnet und mit einem Innengewinde (9) versehen ist,
- wenigstens ein elastisches Mittel (12), das im Inneren des feststehenden Trägers (1) in einem Raum (11) montiert und im wesentlichen radial komprimiert ist,
- wenigstens ein Ritzel (7), das im Träger montiert ist und mit der Verzahnung des Gehäuses (3) in Eingriff steht,
- ein komprimiertes Mittel (5) des elastischen Mittels, das vom Ritzel angetrieben wird und
- Mittel zum Erfassen (15, 16, 17) der Drehung des Gehäuses (3) relativ zum Träger.

10. Rolladen, **dadurch gekennzeichnet, dass** er eine Vorrichtung nach einem der vorangehenden Ansprüche aufweist.

11. Markise, **dadurch gekennzeichnet, dass** sie eine Vorrichtung nach einem Ansprüche 1 bis 9 aufweist.
